# EUROPEAN PATENT APPLICATION

(11) **EP 4 400 274 A1**
(43) Date of publication of application: **17.07.2024**
(21) Application number: 22866966.9
(22) Date of filing: 28.03.2022
(51) Int. Cl.: B25J 9/22

(54) **COMMAND VALUE GENERATING DEVICE, METHOD, AND PROGRAM**

(30) Priority: 07.09.2021 JP 2021145670
(71) Applicant: OMRON Corporation, Kyoto 600-8530 (JP)
(72) Inventor: ABE, Masayoshi, Kyoto-shi, Kyoto 600-8530 (JP); KAWAKAMI, Shinji, Kyoto-shi, Kyoto 600-8530 (JP); KANAI, Akinobu, Kyoto-shi, Kyoto 600-8530 (JP); SAITOH, Yumi, Kyoto-shi, Kyoto 600-8530 (JP)
(74) Representative: SONN Patentanwälte GmbH & Co KG
(86) International application number: PCT/JP2022/015158
(87) International publication number: WO 2023/037634

(57) **Abstract**

An acquisition section (31) acquires command values to execute a task on a target object with a robot (40) and acquires state data representing a state of the robot (40) in a case in which an action of the robot (40) during the task is taught manually, which is state data of plural types including at least action data representing an action of the robot (40), position/orientation data representing a relative position and relative orientation between the robot (40) and the target object, and external force data representing external force received by the target object during the task. A generation section (33) generates a generator for, based on the command values and the state data acquired for corresponding times by the acquisition section (31), generating command values to execute an action with the robot (40) corresponding to the state data that has been input.

## Description

### Technical Field

The present disclosure relates to a command value generating device, a command value generating method, and a command value generating program.

### Background Art

In so-called assembly and pick-and-place tasks performed by robots, the robot might fail at the task in a case in which the target object of the task may have various forms or the like. A feedback control system is according configured to feedback data acquired by various sensors to control the robot.

For example, technology is proposed in which actions of a robot arm controllable by external force are guided manually, the position of the robot and the external forces acting in a case in which this is being performed are recorded, and command values for the action of the robot arm are output by reproducing the recorded information (Non-Patent Document 1).

Moreover, for example, technology is proposed in which a multimodal integrated model is generated using deep learning using sensor data such as audio, images, and the like and using data acquired from actions of a robot, and command values for the robot actions are output from this model (Non-Patent Document 2).

### Related Art Literature

### Non-Patent Literature

Non-Patent Document 1: "Institute of Robotics and Mechatronics-SARA", (online) (search data: 18 June, 2021, Internet <URL: https://www.dlr.de/rm/en/desktopdefault.aspx/tabid-11709/#gallery/29681>
Non-Patent Document 2: Waseda University Doctoral Dissertation "MULTIMODAL INTEGRATION FOR ROBOT SYSTEMS USING DEEP LEARNING", by Kuniaki NODA, July 2015.

### SUMMARY OF INVENTION

### Technical Problem

In order to configure a feedback control system, sensor feature values and the method to generate command values for a robot based on these feature values need to be defined and populated in advance by a user. Moreover, even in a case in which these definitions are accurate, a task will not succeed in a case in which there is inappropriate gain adjustment from the sensor feature values to the command values to the robot, and is it difficult to determine whether a problem is one out of definition, population, or adjustment.

Moreover, in the technology described in Non-Patent Document 1, the force control system being executed inputs unmodified positions and force logging data in a case in which human assisted teaching was performed as the command values for the force control system, and so has low robustness.

Moreover, force sensors are not employed in the technology described in Non-Patent Document 2, and so-called assembly and pick-and-place applications are not robustly executable thereby.

In consideration of the above circumstances, an object of the present disclosure is to configure a feedback control system that enables a task to be executed robustly by a robot on a target object that may have various forms.

### Solution to Problem

In order to achieve the above object, a command value generating device according to the present disclosure is configured including an acquisition section and a generation section. The acquisition section acquires command values to execute a task on a target object with a robot and acquires state data representing a state of the robot in a case in which an action of the robot during the task is taught manually, which is state data of plural types including at least action data representing an action of the robot, position/orientation data representing a relative position and relative orientation between the robot and the target object, and external force data representing external force received by the target object during the task. The generation section generates a generator for, based on the command values and the state data acquired for corresponding times by the acquisition section, generating command values to execute an action with the robot corresponding to the state data that has been input. A feedback control system is accordingly able to be configured that enables a task to be executed robustly by a robot on a target object that may have various forms.

Moreover, the generation section may generate the generator by determining internal parameters of the generator based on optimization. This thereby enables robustness to be raised.

Moreover, the command value generating device according to the present disclosure may further include a reception section that receives a selection of a segment of the state data to be used for generation of the generator from among the state data acquired by the acquisition section for each of plural times of teaching, with the generation section generating the generator utilizing the segment of the state data selected. This thereby enables removal of a segment of the state data not suited to generating the generator.

Moreover, the reception section may receive a selection of a type of the state data to be used for generation of the generator from among the state data of plural types acquired by the acquisition section, and the generation section may generate the generator by optimizing a parameter for generating command values capable of reproducing a state represented by the state data of the selected type based on the state data of the selected type and the command values. This thereby enables generation of a generator that generates command values with a high level of acceptance.

Moreover, the generation section may receive correction to a parameter of the generator that was generated. This thereby enables clearly inappropriate parameters, and parameters not aligned with the intention of the user, or the like to be corrected in advance.

Moreover, parameters of the generator may include an upper limit value of the command value, and a goal value of an action for the command value, with the generation section generating the generator by fixing the upper limit value and the goal value to specified values and optimizing other parameters. This thereby enables generation of a generator capable of outputting command values to implement a robot action desired by a user.

Moreover, the command value generating device according to the present disclosure may be configured further including an instruction section that determines whether or not the robot is operable based on a command value generated in a case in which the state data having a perturbation term included in a parameter that possibly fluctuates in the task has been input to the generator generated by the generation section, and in a case in which determined not operable, instructs the acquisition section to acquire command values and the state data generated in a case in which the perturbation term has been included. This thereby enables automatic determination of whether or not state data sufficient to generate the generator has been acquired by manual teaching.

The generation section may perform at least one of removing part of the state data used for generation of the generator, or adding state data newly acquired by the acquisition section, and then re-execute generation of the generator. This thereby enables an increase in action quality by the feedback control system by re-doing generation of the generator in cases in which an unintended action is executed based on the generated command values.

Moreover, the acquisition section may acquire an image in which a work area including the target object has been captured during teaching, and the command value generating device may be configured to further include a setting section that sets a parameter to recognize the work area based on the image acquired by the acquisition section. This thereby enables setting of parameters for recognition to be performed together with generation of the generator.

Moreover, the acquisition section may acquire a distance between a camera for capturing the image and the target object as computed based on a pre-set size of the target object and on a size on an image of the target object as recognized in the image. This thereby enables the distance to the target object to be acquired with good precision without using a special sensor.

Moreover, the manual teaching of an action of the robot may be executed by direct teaching, remote operation from a controller, or remote operation using a teaching machine connected by bilateral control to the robot.

Moreover, the command value generating device according to the present disclosure may be configured further including a control section that controls the robot by outputting command values generated by the generator.

Moreover, the command value generating device according to the present disclosure may be configured further including a detection section that detects for an abnormality occurring during a task performed by the robot by inputting command values generated by the generator into a generator for back calculation to estimate the state data, and comparing the state data as estimated against the state data acquired by the acquisition section.

A command value generating method according to the present disclosure is a method in which an acquisition section acquires command values to execute a task on a target object with a robot and acquires state data representing a state of the robot in a case in which an action of the robot during the task is taught manually, which is state data of plural types including at least action data representing an action of the robot, position/orientation data representing a relative position and relative orientation between the robot and the target object, and external force data representing external force received by the target object during the task, and a generation section generates a generator for, based on the command values and the state data acquired for corresponding times by the acquisition section, generating command values to execute an action with the robot corresponding to the state data that has been input.

Moreover, a command value generating program according to the present disclosure is a program that causes a computer to function as an acquisition section that acquires command values to execute a task on a target object with a robot and acquires state data representing a state of the robot in a case in which an action of the robot during the task is taught manually, which is state data of plural types including at least action data representing an action of the robot, position/orientation data representing a relative position and relative orientation between the robot and the target object, and external force data representing external force received by the target object during the task, and as a generation section that generates a generator for, based on the command values and the state data acquired for corresponding times by the acquisition section, generating command values to execute an action with the robot corresponding to the state data that has been input.

The command value generating device, method, and program according to the present disclosure enable configuration of a feedback control system that enables a task to be executed robustly by a robot on a target object that may have various forms.

### BRIEF DESCRIPTION OF DRAWINGS

Fig. 1 is a schematic diagram of a robot control system according to first to third exemplary embodiments and a fifth exemplary embodiment.
Fig. 2 is a diagram to explain an example of teaching an action to a robot manually.
Fig. 3 is a diagram to explain another example of teaching an action to a robot manually.
Fig. 4 is a diagram to explain another example of teaching an action to a robot manually.
Fig. 5 is a diagram illustrating an example of a task to explain requirements of a sensor.
Fig. 6 is a block diagram illustrating a hardware configuration of a command value generating device.
Fig. 7 is a block diagram illustrating an example of a functional configuration of the command value generating device according to a first and third exemplary embodiment.
Fig. 8 is a diagram to explain conversion from sensor data to state data.
Fig. 9 is a diagram illustrating an example of a segment selection screen.
Fig. 10 is a diagram to explain a generator.
Fig. 11 is a diagram to explain feedback control employing command values generated by a generator.
Fig. 12 is a flowchart illustrating a flow of training processing in the first exemplary embodiment.
Fig. 13 is a flowchart illustrating a flow of control processing.
Fig. 14 is a block diagram illustrating an example of a functional configuration of a command value generating device according to a second exemplary embodiment.
Fig. 15 is a flowchart illustrating a flow of training processing in a second exemplary embodiment.
Fig. 16 is a diagram illustrating an example of a type selection screen.
Fig. 17 is a diagram illustrating an example of a schematic configuration of a generator in a third exemplary embodiment.
Fig. 18 is a flowchart illustrating a flow of training processing in the third exemplary embodiment.
Fig. 19 is a schematic diagram of a robot control system according to a fourth exemplary embodiment.
Fig. 20 is a block diagram illustrating an example of a functional configuration of a command value generating device according to the fourth exemplary embodiment.
Fig. 21 is a flowchart illustrating a flow of training processing in the fourth exemplary embodiment.
Fig. 22 is a diagram to explain determination of an action target based on a distance to a target object.
Fig. 23 is a block diagram illustrating an example of a functional configuration of a command value generating device according to a fifth exemplary embodiment.
Fig. 24 is a diagram to explain processing of a detection section.
Fig. 25 is a flowchart illustrating a flow of detection processing.

### DESCRIPTION OF EMBODIMENTS

Description follows regarding examples of exemplary embodiments of the present disclosure, with reference to the drawings. Note that configuration elements and portions that are the same or equivalent are appended with the same reference numerals in each of the drawings. Moreover, dimensions and proportions in the drawings are exaggerated for ease of explanation, and sometimes differ from actual proportions.

### First Exemplary Embodiment

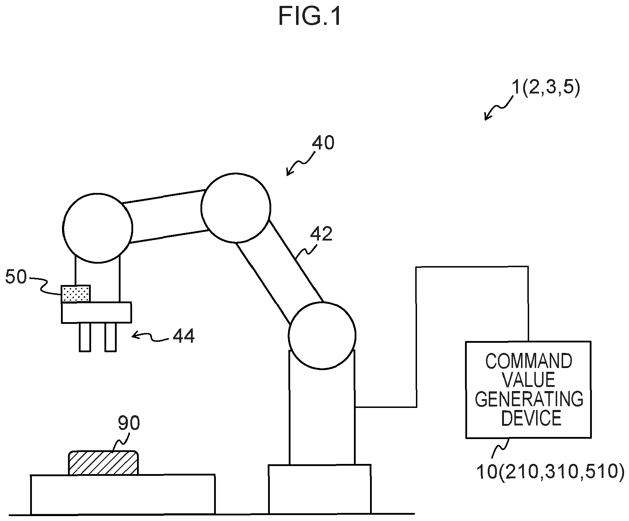

As illustrated in Fig. 1, a robot control system 1 according to a first exemplary embodiment is configured including a command value generating device 10, a robot 40, and a sensor group 50.

The robot 40 includes a robot arm 42 and a hand section 44. The robot arm 42 is configured including links, and joints that connect between the links and that also rotate or perform a linear motion extension or contraction under drive from motors. The robot arm 42 drives the motors according to command values output from the command value generating device 10, and change the rotation angle or the extension/contraction state of the joints. The hand section 44 is accordingly controlled so as to adopt a specified position and specified orientation in three-dimensional space.

The hand section 44 is provided at a distal end of the robot arm 42 and is a tool capable of gripping a target object 90. The hand section 44 may, for example, be a multi-joint multi-finger robot hand, a gripper robot hand, a suction pad, or the like. Note that in cases in which a painting task is to be performed on a target object by the robot 40, the robot 40 may substitute for the hand section 44 a tool corresponding to the task, such as a tool provided with a nozzle to act as an ejection port for paint material.

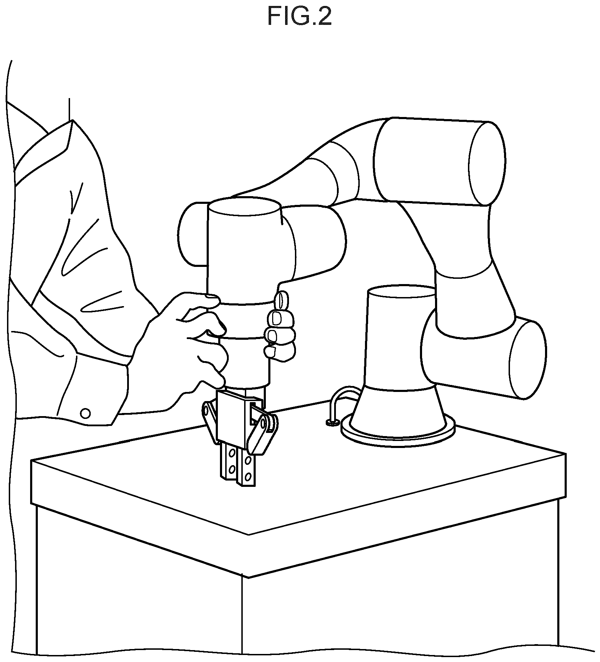

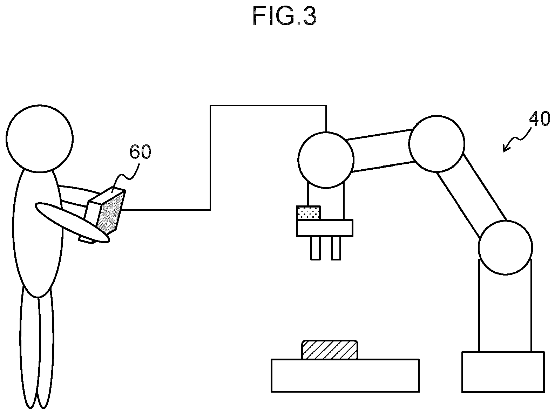

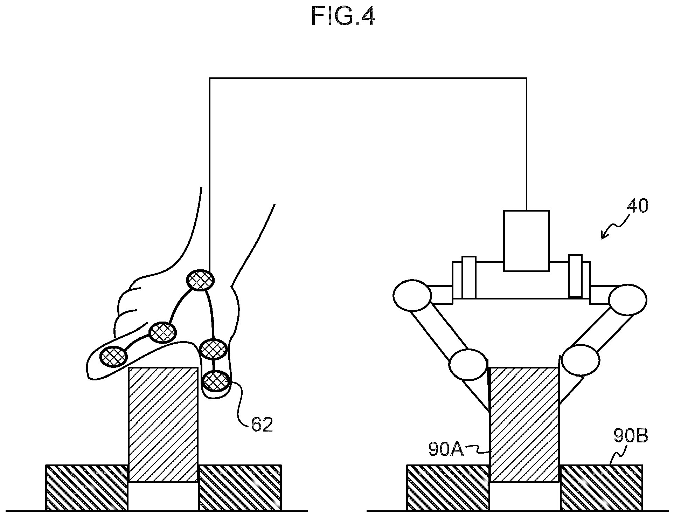

Moreover, the robot 40 is configured so as to enable teaching of actions manually. Teaching actions manually may, for example as illustrated in Fig. 2, be by direct teaching, namely by the hand of a person assisting teaching so as to convey the action. Moreover, for example as illustrated in Fig. 3, teaching may be performed by a person operating a controller 60 to perform an action of the robot 40 by remote operation. Moreover, for example as illustrated in Fig. 4, teaching may be performed by remote operation using a teaching machine 62 connected by bilateral control to the robot 40. Force imparted by the teaching machine 62 is transmitted to the robot 40 by bilateral control, and external force acting on the robot 40 is transmitted to the teaching machine 62.

The sensor group 50 includes plural types of sensor, and the sensor data acquired by each of the sensors is output as time series data to the command value generating device 10. Note that although the sensor group 50 is schematically represented in Fig. 1 as a single block in the vicinity of the hand section 44, each of the sensors contained in the sensor group 50 is actually provided at a respective position corresponding to the type and function of the sensor.

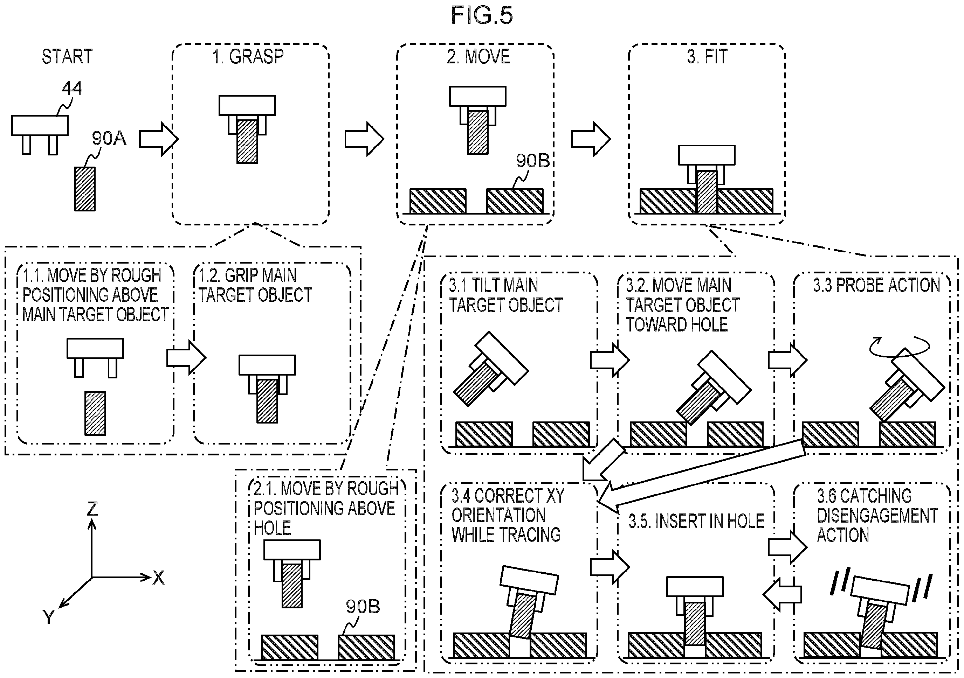

The sensors may be provided as needed according to the task to be performed by the robot 40. As an example, explanation follows regarding various sensors needed for an anticipated task as illustrated in Fig. 5. The task illustrated in Fig. 5 is a task to grip a main target object 90A with the hand section 44, and to fit the main target object 90A and an auxiliary target object 90B together. Examples thereof include insertion of a connector, board insertion into a case, insertion of an electrolytic capacitor onto a board, and the like. Consider, as a plan to implement fitting, utilizing an action strategy to align the position and orientation of the main target object 90A by contacting edges and faces of the main target object 90A and the auxiliary target object 90B. Even in cases in which there is course resolution in sensors and actuators, the position and orientation of the main target object 90A is easily aligned at fitting position by fitting together utilizing such contact.

The "action strategy" referred to here is an execution order of "action primitives" to execute the "action". The "action" is a movement unit having an objective, and is a movement with an objective such as, for example, "grasping", "moving", "fitting", or the like implemented by the "action strategy". The "action primitives" are smallest units of movement of the robot such as "hold", "move", "fix", or the like. The "action primitives" are set with goals and are, for example, "lay down inclined", "move to position where projection will enter hole", "fix in groove". In the example of Fig. 5, each of the locations illustrated by dashed lines corresponds to an "action", each of the locations indicated by single-dot broken lines corresponds to an "action strategy", and each of the locations indicated by double-dot broken line corresponds to an "action primitive". Moreover, the execution order of an "action" is called an "action sequence".

Fig. 5 illustrates an example of an action sequence including each of the actions "1. Grasp", "2. Move", and "3. Fit". Moreover, the action strategy of action "1. Grasp" includes defined action primitives "1.1. Move by rough positioning above main target object", and "1.2. Grip main target object". "1.1. Move by rough positioning above main target object" is a movement to move the hand section 44 to a position where the main target object 90A is grippable. "1.2. Grip main target object" is a movement to grip the main target object 90A using the hand section 44. Moreover, the action strategy of the action "2. Move" includes a defined action primitive "2.1. Move by rough positioning above hole". "2.1. Move by rough positioning above hole" is a movement to move the main target object 90A in an X axis direction and a Y axis direction to align with a fitting position.

Moreover, the action strategy of the action "3. Fit" includes defined action primitives of "3.1 Tilt main target object", "3.2. Move main target object toward hole", "3.3 Probe action", "3.4 Correct XY orientation while tracing", "3.5. Insert in hole", and "3.6 Catching disengagement action". "3.1 Tilt main target object" is a movement to change orientation of the main target object 90A such that the orientation is inclined. "3.2. Move main target object toward hole" is a movement to fix the main target object 90A to the auxiliary target object 90B, and to move the main target object 90A in a fitting position direction while tracing. Fixing is a movement to integrate the main target object 90A and the auxiliary target object 90B together. Tracing is a movement to move the main target object 90A in the X axis direction and the Y axis direction while remaining restricted by a surface of the auxiliary target object 90B. "3.3 Probe action" is a movement to probe the fitting position while tracing along the auxiliary target object 90B surface with the main target object 90A. "3.4 Correct XY orientation while tracing" is a movement to utilize alignment of the main target object 90A with the auxiliary target object 90B to correct the position and orientation of the main target object 90A in the X axis direction and the Y axis direction. "3.5. Insert in hole" is a movement to move the main target object 90A downward in the Z axis direction while remaining restricted by the inner periphery of the fitting position (hole) of the auxiliary target object 90B. "3.6 Catching disengagement action" is a movement to change the orientation of the main target object 90A so as to disengage catching.

The sensor conditions needed in order to control the robot 40 so as to execute each of the above action primitives are given below. "1.1. Move by rough positioning above main target object" needs position and orientation errors between the hand section 44 and the main target object 90A to be able to be recognized in each of the axial directions X, Y, Z, and in a rotation direction about the Z axis. "1.2. Grip main target object" needs gripping force by the hand section 44 to be able to be recognized. "2.1. Move by rough positioning above hole" needs positional error between the fitting position of the main target object 90A and the auxiliary target object 90B to be able to be recognized in each of the axial directions X, Y, Z, and the rotation direction about the Z axis. For each of the action primitives that are the action strategy of the action "3. Fit", reaction force in each of the axial directions received when the main target object 90A has contacted the upper face of the auxiliary target object 90B needs to be able to be detected, and the orientation of the main target object 90A to be able to be recognized.

An example of sensors that satisfy the conditions listed above is given below. For example, a vision sensor, a 3D sensor, or the like capable of detecting the position of an object in three-dimensional space may be employed as a sensor capable of recognizing positional errors. A force sensor, a pad sensor, a difference between a command value and a hand encoder, or the like may be employed as a sensor capable of recognizing gripping force. Note that a pad sensor is a sensor to detect a deformation amount of a suction pad in cases in which the hand section 44 is a type that grips the target object 90 using suction and is, for example, a proximity sensor, pressure sensor, or the like. A force sensor, pad sensor, or the like may be employed as a sensor capable of detecting reaction force in each of the axial directions. Moreover, an arm encoder and a hand encoder, and a pad sensor or the like may be employed as a sensor capable of recognizing the orientation of the main target object 90A. Note that an arm encoder is an encoder to detect a rotation angle of each of the joints of the robot arm 42, and a hand encoder is an encoder to detect a rotation angle of each of the joints of the hand section 44, detect a degree of opening of a gripper, and the like.

In order to simplify explanation, description follows regarding a case in which the hand section 44 is a multi-finger multi-joint robot and there is a single target object 90 as the target for a task. Moreover, a case will be described in which the sensors contained in the sensor group 50 are a vision sensor, an arm encoder, a hand encoder, and a pad sensor provided to the distal end of the hand section 44. Note that the vision sensor is attached to the distal end of the hand section 44 so as to have a direction of image capture parallel to the Z axis in the hand section 44 coordinate system. A distance between the vision sensor and the target object may accordingly be taken as a distance between the distal end of the hand section 44 and the target object.

Note that there is no limitation to this example of sensors contained in the sensor group 50, and the sensor group 50 may include any sensors capable of detecting the relative position and relative orientation between the target object 90 and the hand section 44, the relative position between the main target object 90A and the auxiliary target object 90B, and also detecting external force acting on the target object 90.

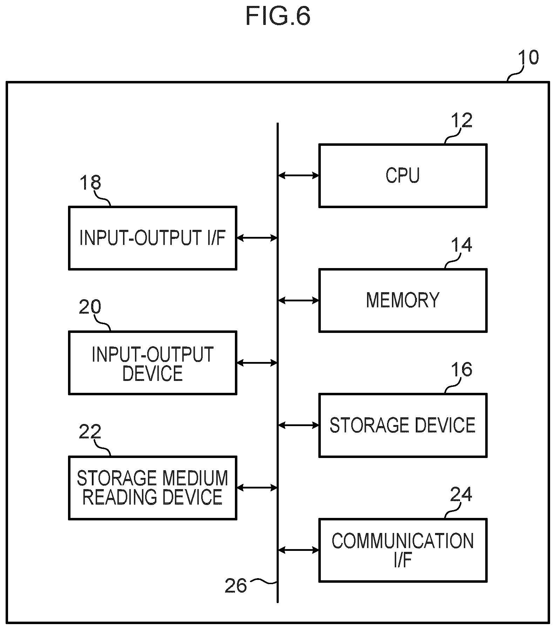

Fig. 6 is a block diagram illustrating a hardware configuration of the command value generating device 10 according to the first exemplary embodiment. As illustrated in Fig. 6, the command value generating device 10 includes a central processing unit (CPU) 12, memory 14, a storage device 16, an input-output interface (I/F) 18, an input-output device 20, a storage medium reading device 22, and a communication I/F 24. Each configuration is connected so as to be able to mutually communicate through a bus 26.

A command value generating program including a training program for executing training processing, described later, and a control program for executing control processing, are stored in the storage device 16. The CPU 12 is a central processing unit for executing various programs and controlling each configuration. Namely, the CPU 12 reads the program from the storage device 16, and executes the program using the memory 14 as workspace. The CPU 12 controls each configuration and performs various computational processing according to the programs stored on the storage device 16.

The memory 14 is configured by random access memory (RAM) and serves as workspace for temporarily storing programs and data. The storage device 16 is configured by a read only memory (ROM), and a hard disk drive (HDD), solid state drive (SSD), or the like, and stores various programs including an operating system and various data.

The input-output I/F 18 is an interface for respectively connecting the robot 40 and the sensor group 50 to the command value generating device 10. Sensor data output from each of the sensors contained in the sensor group 50 are input to the command value generating device 10 through the input-output I/F 18. Moreover, the command values generated in the command value generating device 10 are output to the robot 40 through the input-output I/F 18. The input-output device 20 is, for example, an input device such as a keyboard, mouse, or the like to perform various input, and an output device such as a display, printer, or the like for performing output of various information. By adopting a touch panel display as the output device, this may also function as an input device.

The storage medium reading device 22 reads data stored on various storage media such as a compact disc (CD)-ROM, digital versatile disc (DVD)-ROM, Blu-ray disc, universal serial bus (USB) memory, or the like, and writes data to the storage media. The communication I/F 24 is an interface to communicate with other devices, and employs a standard such as, for example, Ethernet (registered trademark), FDDI, or Wi-Fi (registered trademark).

Next, description follows regarding a functional configuration of the command value generating device 10 according to the first exemplary embodiment.

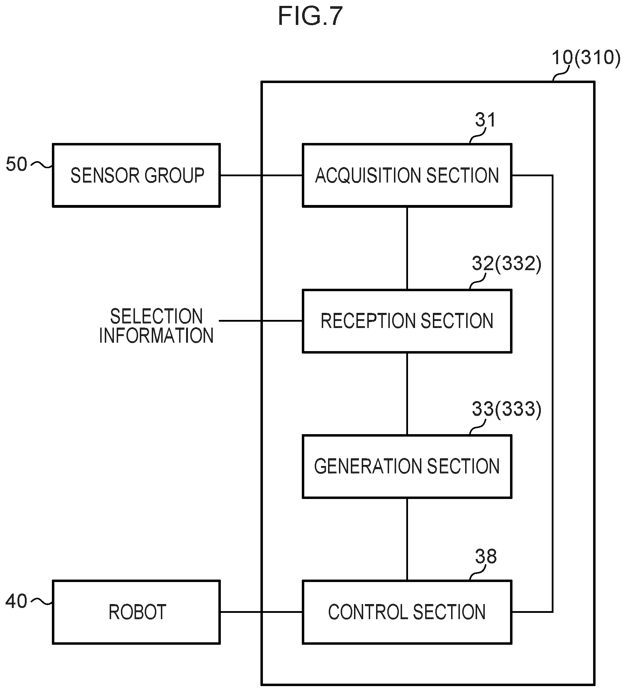

Fig. 7 is a block diagram illustrating an example of a functional configuration of the command value generating device 10. As illustrated in Fig. 7, the command value generating device 10 includes, as functional configuration, an acquisition section 31, a reception section 32, a generation section 33, and a control section 38. Each functional configuration is implemented by the CPU 12 reading the command value generating program stored in the storage device 16, and expanding and executing the command value generating program in the memory 14.

The acquisition section 31 acquires the command values to execute a task on the target object 90 with the robot 40 and state data representing states of the robot 40 in a case in which the action of the robot 40 during this task is taught manually. The state data includes plural types of data such as, for example, action data representing an action of the robot 40 during the above teaching, position/orientation data representing the relative position and relative orientation between the robot 40 and the target object during the above teaching, external force data representing external force received by the target object during the task, and the like. Specifically, the acquisition section 31 acquires sensor data from the respective sensors contained in the sensor group 50, and converts the sensor data into state data.

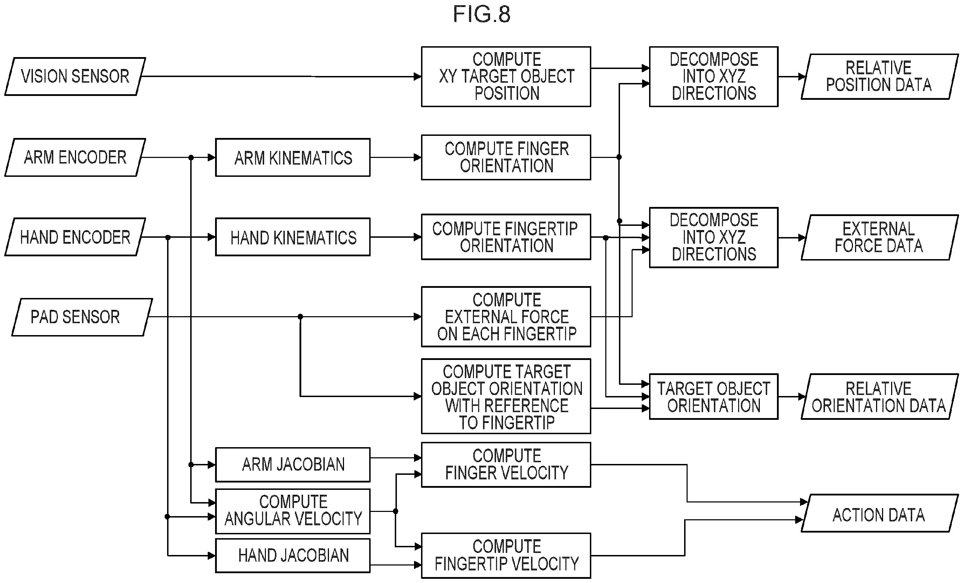

More specifically as illustrated in Fig. 8, the acquisition section 31 acquires an image that is sensor data of the vision sensor, and computes the position and orientation of the target object 90 in the image, namely in an XY plane. Moreover, the acquisition section 31 acquires sensor data of the arm encoder, and computes the orientation (roll angle, pitch angle, yaw angle) of the distal end (hereafter referred to as "finger") of the robot arm 42 based on these sensor data and on kinematic information about the robot arm 42. Moreover, the acquisition section 31 acquires sensor data of the hand encoder, and computes the orientation of the distal end (hereafter referred to as "fingertip") of the hand section 44 with respect to the finger based on these sensor data and on kinematic information about the hand section 44. Moreover, the acquisition section 31 acquires sensor data from the pad sensor, and computes external force acting on each fingertip from these sensor data. Moreover, from these sensor data the acquisition section 31 computes the orientation of the target object 90 gripped by the hand section 44 with respect to the fingertip.

Moreover, based on the computed position of the target object 90 in the image and the orientation of the finger, the acquisition section 31 acquires values of a distance from the finger to the target object 90 decomposed in each of the axial directions X, Y, Z as relative positional data of the target object 90 with respect to the finger. Moreover, the acquisition section 31 computes an orientation of the fingertip in an absolute coordinate system based on the orientation of the finger and on the orientation of the fingertip with respect to the finger. Moreover, the acquisition section 31 acquires, as external force data, values of the external force acting on each fingertip decomposed in each of the axial directions X, Y, Z based on the orientation of the fingertip in the absolute coordinate system. Moreover, the acquisition section 31 acquires, as relative orientation data of the target object of the target object 90 with respect to the finger, an orientation of the target object 90 being gripped by the hand section 44 with respect to the fingertip, and an orientation of the target object 90 as identified based on the orientation of the finger and on the orientation of the fingertip with respect to the finger.

Moreover, the acquisition section 31 computes an angular velocity of rotation of each of the joints of the robot arm 42 and the hand section 44 from the sensor data of the arm encoder and the hand encoder. Moreover, the acquisition section 31 computes a velocity of the finger based on the sensor data of the arm encoder and a Jacobian of the robot arm 42. Moreover, the acquisition section 31 computes a velocity of the fingertip based on the sensor data of the hand encoder and on a Jacobian of the hand section 44. The acquisition section 31 acquires these velocities of the finger and the fingertip as action data.

Note that these sensor data are time series data, and so the converted relative position data, relative orientation data, external force data, and action data are each also time series data.

The reception section 32 receives a selection of a segment of the state data to be utilized in generation of a generator, described later, from out of the state data acquired by the acquisition section 31 for each teaching performed manually plural times. The segment of the state data includes segments included in a specified time range both for the state data acquired for each of some teaching selected from the plural times of teaching, and for the state data acquired for a single time of teaching.

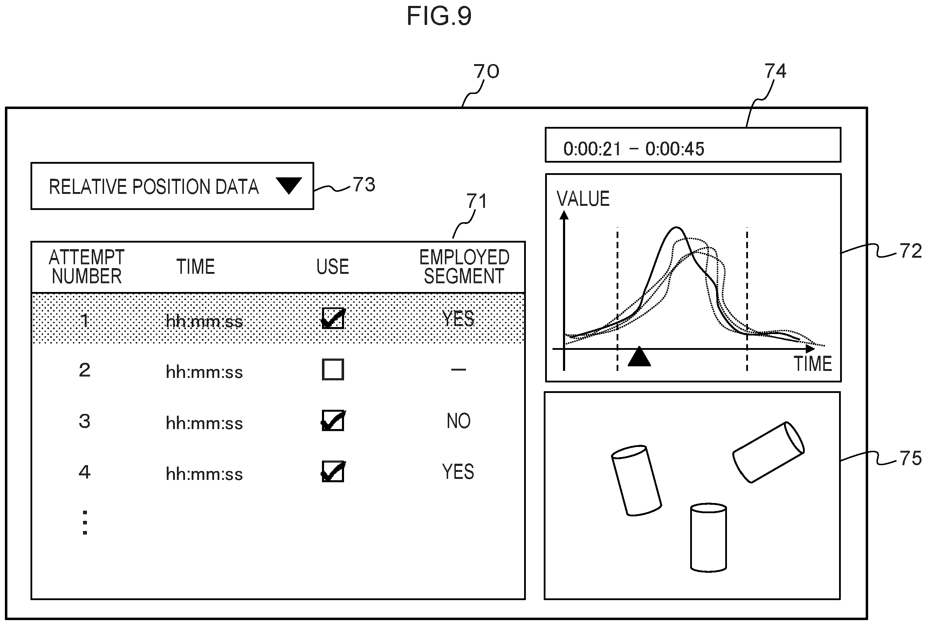

For example, the reception section 32 displays a segment selection screen 70 such as illustrated in Fig. 9 and receives information selected thereon (hereafter referred to as "selection information") as a segment of state data to be utilized in generation of the generator. The segment selection screen 70 illustrated in Fig. 9 includes a selection field 73 for selecting the state data type. Moreover, the segment selection screen 70 includes a selection field 71 for selecting, for the state data of the type selected in the selection field 73, whether or not to employ the state data for each of plural teachings as state data to be utilized in generation of the generator. In the example of Fig. 9, the selection field 71 contains each item of an "Attempt number" to identify each of the plural teachings, "Time" when the teaching was executed, "Use" that is checked when to be employed, and "Segment Employed".

Moreover, the segment selection screen 70 includes a display field 72 in which each state data type selected in the selection field 73 is displayed as a graph. In the display field 72, a graph of the state data selected by the selection field 71 is emphasis-displayed. In Fig. 9 the graph of the selected state data is displayed by a solid line, and the graphs of other state data are displayed by doted lines. Moreover, the teaching of the attempt number selected is displayed shaded in the selection field 71.

Moreover, the display field 72 includes slide bars (dashed lines in Fig. 9) to respectively specify a start time and an end time of the time range for selection. A time range is selected by sliding the slide bars. Moreover, the segment selection screen 70 includes a display field 74 for displaying the time range specified by the slide bars in the display field 72. Moreover, the segment selection screen 70 includes a display field 75 displaying an image acquired by the vision sensor at the time (at the black triangle in Fig. 9) specified in the display field 72. This thereby enables a user to select a time range in consideration of the image being displayed in the display field 75. "Segment employed" of the display field 71 is "yes" for teaching of an attempt number including state data specified by the time range, and is "no" when the time range is not specified.

The generation section 33 generates the generator based on state data of the segment indicated by the selection information received by the reception section 32 from out of the state data acquired by the acquisition section 31, and on the command values of the corresponding time. The generator generates and outputs command values for executing the action corresponding to the input state data with the robot 40.

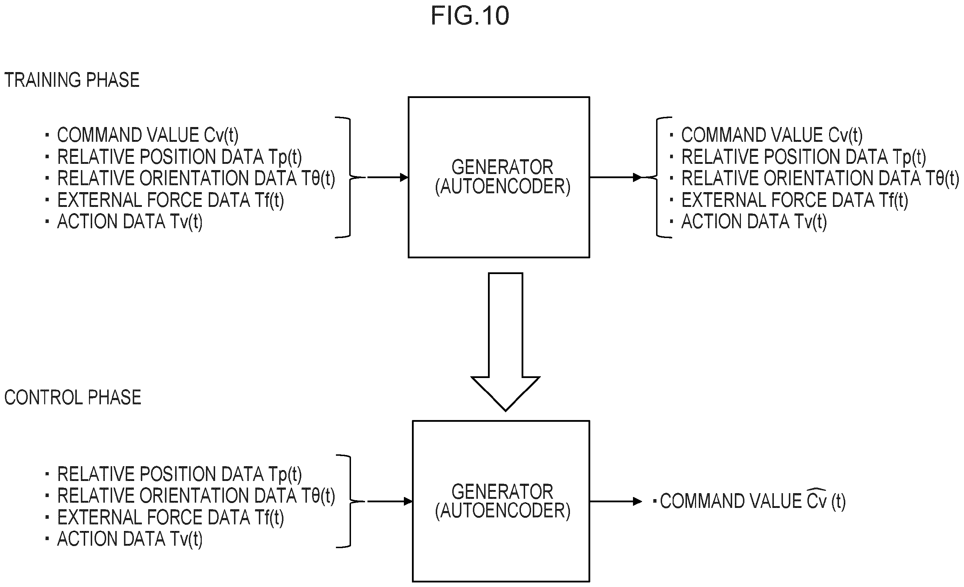

Specifically, the generation section 33 takes command values Cv(t) and state data T(t) for time t as the inputs and outputs of the generator configured by an autoencoder, such as a multi-layer neural network or the like, as illustrated by a training phase illustrated at the top of Fig. 10, for example. The state data T(t) includes relative position data Tp(t), relative orientation data Tθ(t), external force data Tf(t), and action data Tv(t). The command values Cv(t) in the training phase may be employed as the action data Tv(t). The generation section 33 employs plural combinations of command values and state data to generate the generator by training weights of each layer as parameters of the neural network.

The control section 38 controls the action of the robot 40 by outputting the command values generated by the generator generated using the generation section 33. Specifically, the control section 38 receives the state data T(t) from the acquisition section 31, and inputs this to the generator as illustrated in the control phase at the bottom of Fig. 10. Command values (in this case command velocities) Cv^ (represented by a "^ (hat)" above "Cv" in Fig. 10) (t) at time t are thereby output from the generator that correspond to the current state represented by the state data T(t) from the generator. The control section 38 outputs the command values Cv^(t) to each of the motors M of the robot 40. The robot 40 thereby performs an action by the motors being driven based on the command values.

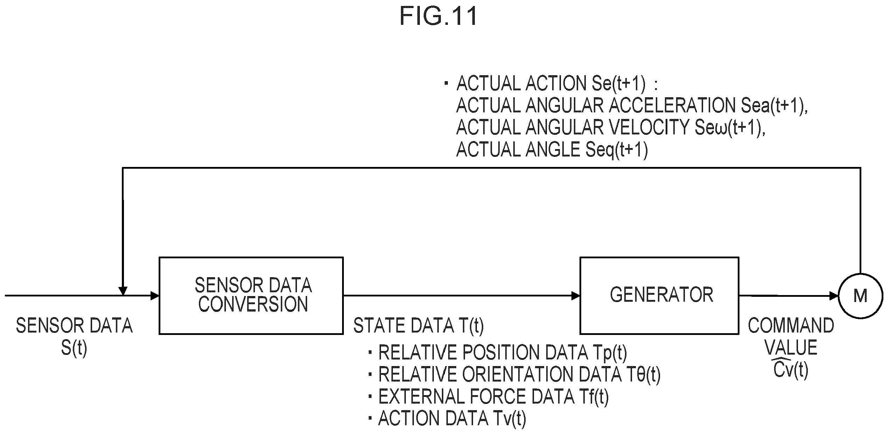

Thereby, feedback control of the robot 40 is implemented using the command values generated by the generator as illustrated in Fig. 11. Specifically, the sensor data group S(t) at time t is converted into the relative position data Tp(t), the relative orientation data Tθ(t), the external force data Tf(t), and the action data Tv(t) configuring the state data T(t) at time t, and then input to the generator. The generator generates the command values Cv^(t) at time t based on the input state data T(t), and the command values Cv^(t) are output to each of the motors M of the robot 40. The robot 40 performs the action by the motors M being driven based on the command values Cv^(t). Due to the robot 40 performing the action, an actual angular acceleration Sea(t+1), an actual angular velocity Seω(t+1), and an actual angle Seq(t+1) are acquired as an actual action Se(t+1) by the arm encoder and the hand encoder. This actual action Se(t+1) and the sensor data acquired from the vision sensor and the pad sensor at time t+1 configure a sensor data group S(t+1) for the next time t+1.

Next, description follows regarding operation and advantageous effects of the robot control system 1 according to the first exemplary embodiment.

In the training phase, the CPU 12 functions as each functional configuration of the command value generating device 10 and training processing is executed by the CPU 12 reading a training program from the storage device 16, and expanding and executing the training program in the memory 14. Moreover, in the control phase, the CPU 12 functions as each functional configuration of the command value generating device 10 and control processing is executed by the CPU 12 reading the control program from the storage device 16, and expanding and executing the control program in the memory 14. Description follows regarding each of the training processing and the control processing.

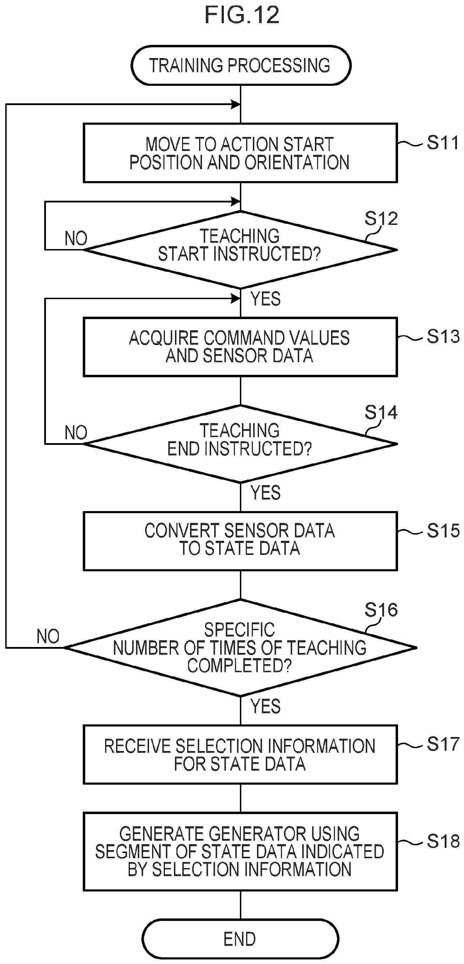

Fig. 12 is a flowchart illustrating a flow of training processing executed by the CPU 12 of the command value generating device 10. The training processing is executed for each action in the action sequence to be executed by the robot 40.

At step S11, the control section 38 controls the robot 40 so as to adopt a start position and orientation of the subject action of the training processing. For example from out of the actions in the action sequence, the control section 38 may take a final position and orientation of the action executed by the previous training processing as the start position and orientation of the subject action of the training processing this time.

Next at step S12, the acquisition section 31 determines whether or not starting teaching has been instructed, such as by a user pressing a button representing teaching start. Processing transitions to step S13 when teaching start has been instructed, and determination of the current step is repeated when not instructed. After teaching start has been instructed, a user teaches the subject action of the robot 40 manually.

At step S13, the acquisition section 31 acquires the command values corresponding to the action being taught, and also acquires sensor data from each of the sensors contained in the sensor group 50. Next at step S14, the acquisition section 31 determines whether or not ending teaching has been instructed such as by a user pressing a button representing teaching end. Processing transitions to step S15 when teaching end has been instructed, and processing returns to step S13 when teaching end has not been instructed. At step S15, the acquisition section 31 converts the sensor data acquired at step S13 into state data.

Next at step S16, the acquisition section 31 determines whether or not teaching has been completed a specific number of times. Processing transitions to step S17 when the teaching has been completed the specific number of times, and processing returns to step S11 when not completed the specific number of times. At step S17, the reception section 32 displays the segment selection screen 70, and receives selection information of state data to be used for generation of the generator. Next at step S18, the generation section 33 generates the generator using the segment of state data indicated by the selection information and the corresponding command values, and then ends the training processing.

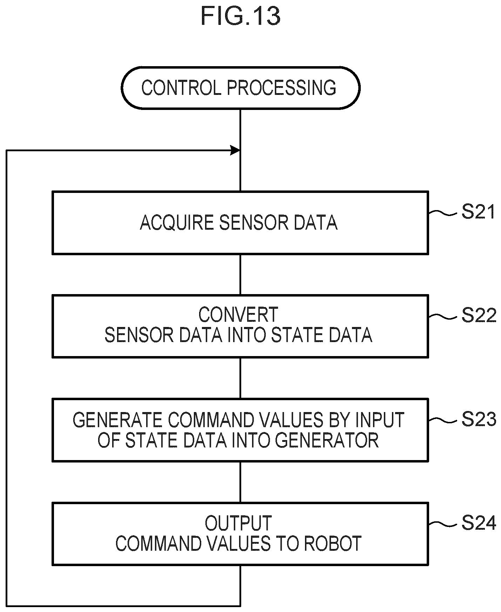

Fig. 13 is a flowchart illustrating a flow of control processing executed by the CPU 12 of the command value generating device 10.

At step S21, the acquisition section 31 acquires sensor data for each of the sensors contained in the sensor group 50. Next at step S22, the acquisition section 31 converts the sensor data acquired at step S21 into state data. Next at step S23, the control section 38 acquires the state data from the acquisition section 31 and generates command values by input to the generator. Next at step S24, the control section 38 outputs the generated command values to each of the motors of the robot 40 and processing then returns to step S21.

As described above, in the robot control system according to the first exemplary embodiment the command value generating device acquires command values for executing a task on a target object using a robot, and acquires state data representing states of the robot in a case in which actions of the robot during this task are taught manually. The state data is plural types of data, including action data representing actions of the robot, position/orientation data representing the relative position and relative orientation between the robot and the target object, external force data representing external forces received by the target object during the task, and the like. Based on the command values and the state data acquired at corresponding times, the command value generating device generates the generator for generating command values to execute the actions with the robot that correspond to the input state data. This thereby enables a feedback control system to be configured for robustly executing a task on a target object that may have various forms with a robot.

Moreover, robustness is low in the technology described in Non-Patent Document 1 because the force control system being executed takes positions in a case in which person-assisted teaching is being performed and logging data of force without modification as command value inputs of the force control system. In order to raise robustness, there is a need to internally estimate feature values to accurately represent the current state, and to generate command values based on these feature values, however such a structure is not present in the technology described in Non-Patent Document 1. A neural network is a model with a structure that holds feature values internally. A neural network converts data from an input layer by changing network weights, such that feature values appear in a middle layer. However, over training is known to occur in a case in which state space of the middle layer is too wide, and this indicates that although they have the ability to be able to secure robustness, there is also a chance that robustness is not able to be secured. In response to this problem, a so-called autoencoder structure and training method are proposed to recover robustness by deliberately making the state space narrow (restricting the dimensions). The command value generating device of the exemplary embodiment described above can configure a sensor feedback system so as to be able to secure greater robustness by adopting an autoencoder as the generator.

Moreover, the command value generating device receives whether or not to employ each of the state data acquired by plural times of teaching, receives a selection of a time range of the state data to be employed, and generates the generator using the state data of selected segment. This thereby enables a situation to be prevented in which, in a case in which an unintended action has been mistakenly taught to the robot by manual teaching or the like, state data based on sensor data acquired at this time is utilized to generate the generator.

Note that in the exemplary embodiment described above, as the manual teaching, a remote operation may be performed using a teaching machine connected by bilateral control to a robot. In such cases, the command value generating device may collect external force data in a case in which a task was executed using the teaching machine, together with compliance parameters. Then the command value generating device may employ the collected external force data and the compliance parameters to train, as the parameters, weights of each layer of a generator configured from an autoencoder such as in the exemplary embodiment described above, and may generate a generator that uses the external force data as input and that outputs the compliance parameters. Thus even in cases in which there is a need to dynamically change the compliance parameters of the hand section according to the situation, such changes can be executed automatically.

Moreover, in the exemplary embodiment described, the command value generating device may perform at least one action out of removing part of the state data utilized to generate the generator, or adding newly acquired state data, and then re-execute generation of the generator. Specifically, to remove part of the state data after the generator has been generated, a user may check the action of the robot based on the command values output from the generator, and then may select state data to remove from a similar screen to the segment selection screen as illustrated in Fig. 9. Moreover to add state data, additional state data may be acquired by performing manual teaching again for segments where an action in the action sequence is unnatural. This thereby enables the quality of actions by the feedback control system to be raised by re-doing generation of the generator in cases in which an unintended action is executed based on the generated command values.

### Second Exemplary Embodiment

Next, description follows regarding a second exemplary embodiment. Note that the same reference numerals will be appended to configuration in the robot control system according to the second exemplary embodiment similar to that of the robot control system 1 according to the first exemplary embodiment, and detailed explanation thereof will be omitted.

As illustrated in Fig. 1, a robot control system 2 according to the second exemplary embodiment is configured including a command value generating device 210, a robot 40, and a sensor group 50.

Next, description follows regarding a functional configuration of the command value generating device 210 according to the second exemplary embodiment.

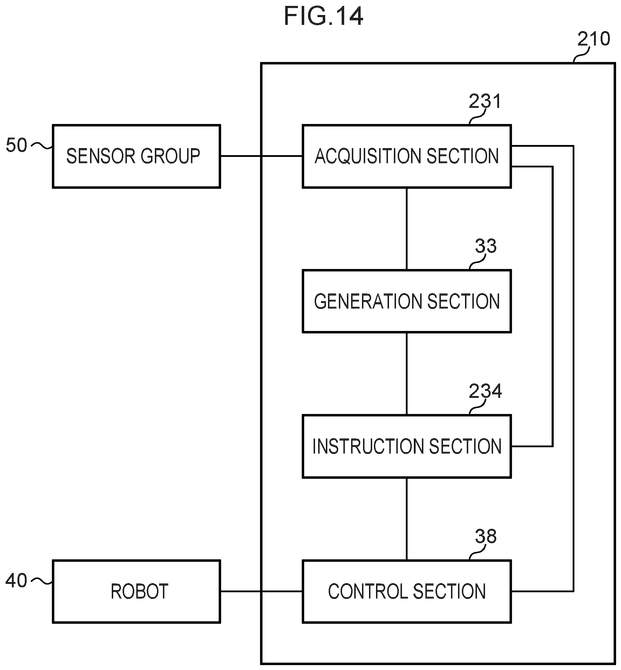

Fig. 14 is a block diagram illustrating an example of a functional configuration of the command value generating device 210. As illustrated in Fig. 14, the command value generating device 210 includes, as functional configuration, an acquisition section 231, a generation section 33, an instruction section 234, and a control section 38. Each functional configuration is implemented by the CPU 12 reading the command value generating program stored in the storage device 16, and expanding and executing the command value generating program in the memory 14. Note that a hardware configuration of the command value generating device 210 is similar to the hardware configuration of the command value generating device 10 according to the first exemplary embodiment as illustrated in Fig. 6, and explanation thereof will be omitted.

The instruction section 234 determines whether or not the robot 40 is operable based on command values generated in a case in which state data including a perturbation term has been input to the generator generated by the generation section 33. The perturbation term is a term related to a parameter having a possibility fluctuation in applications of assembly and pick-and-place. For example, terms related to parameters such as estimated size and mass of the target object 90 for pick-and-place, start position, goal position, and friction coefficient of the target object 90 or the like. For example as the perturbation term, the instruction section 234 adds or subtracts a value according to the size of the target object 90 to or from at least one out of the relative position data or the relative orientation data. The value according to the size of the target object 90 may, for example, be specified as a proportion of the size of the target object 90, or may be specified by a specific numerical value, such as "10 mm" for example. The instruction section 234 determines whether or not operable by executing simulations of the action of the robot 40 based on the command values generated by including the perturbation term. For determination of whether or not operable, determination may be made as to whether or not a task executed in a series of action sequences has been successfully accomplished, or an action goal value may be set and determination made as to whether or not this action goal value has been achieved.

The instruction section 234 instructs the acquisition section 231 to acquire command values and state data generated in a case in which the perturbation term is included for cases in which "not operable" is determined. Specifically, the instruction section 234 indicates a trajectory of the robot 40 including the perturbation term to a user, such as by displaying on a display device, and also instructs the control section 38 to control the robot 40 so as to adopt the start position and orientation of this trajectory.

Next, description follows regarding operation and advantageous effects of the robot control system 2 according to the second exemplary embodiment.

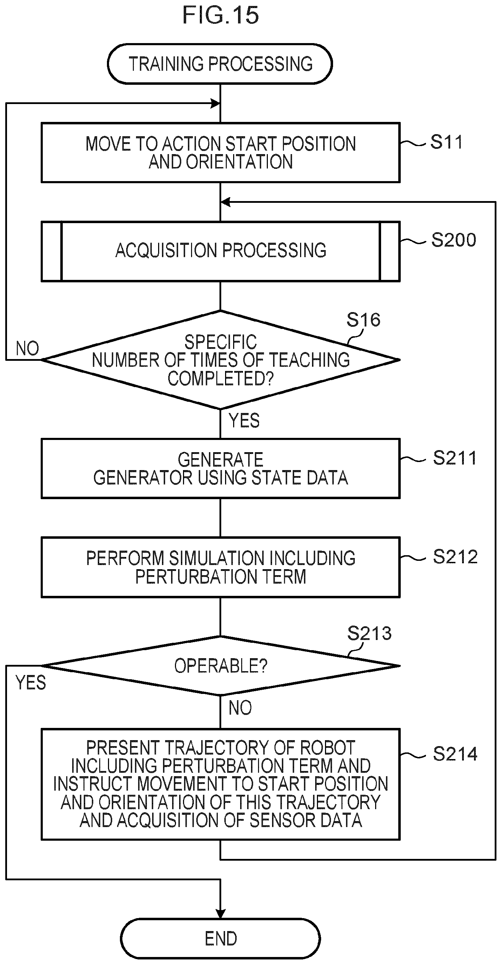

Fig. 15 is a flowchart illustrating a flow of training processing executed by the CPU 12 of the command value generating device 210. The CPU 12 functions as each functional configuration of the command value generating device 210 and the training processing illustrated in Fig. 15 is executed by the CPU 12 reading the training program from the storage device 16, and expanding and executing the training program in the memory 14. Note that in the training processing illustrated in Fig. 15, the same step numbers are appended to similar processing to that of the training processing of the first exemplary embodiment (Fig. 12), and detailed explanation thereof will be omitted.

At step S11, the control section 38 controls the robot 40 so as to adopt a start position and orientation of the subject action of the training processing. Next at step S200 acquisition processing is executed. This acquisition processing is similar to that of steps S12 to S15 of the training processing illustrated in Fig. 12. Next at step S16, the acquisition section 231 determines whether or not teaching has been completed a specific number of times. Processing transitions to step S211 when teaching has been completed the specific number of times, and processing returns to step S11 when not completed.

At step S211, the generation section 33 generates a generator using the acquired state data and command values. Next at step S212, the instruction section 234 performs a simulation of an action of the robot 40 based on the command values generated in a case in which state data including a perturbation term was input to the thus generated generator. Next at step S213, the instruction section 234 determines, as a simulation result, whether or not the robot 40 is operable when the perturbation term was included. The training processing is ended in cases when operable, and processing transitions to step S214 when not operable.

At step S214, the instruction section 234 presents a trajectory of the robot 40 including the perturbation term to a user by displaying on a display device or the like, and also instructs the control section 38 to control the robot 40 so as to adopt the start position and orientation of this trajectory, and then returns to step S200.

The control processing is similar to that of the first exemplary embodiment, and so explanation thereof will be omitted.

As described above, in the robot control system according to the second exemplary embodiment, the command value generating device determines whether or not the robot is operable based on the command value generating in a case in which state data including a perturbation term was input to the generated generator. Then when not operable, the command value generating device instructs the acquisition section to acquire the command values and state data generated in a case in which the perturbation term was included. This thereby enables automatic determination as to whether or not sufficient state data for training the generator has been acquired by manual teaching. This means that even in a case in which a user is unfamiliar with the robot system, they are still able to determine whether or not the data necessary to generate the generator is collected.

### Third Exemplary Embodiment

Next, description follows regarding a third exemplary embodiment. Note that the same reference numerals are appended in the robot control system according to the third exemplary embodiment to those of similar configuration to that of the robot control system 1 according to the first exemplary embodiment, and detailed explanation thereof will be omitted.

As illustrated in Fig. 1, a robot control system 3 according to the third exemplary embodiment is configured including a command value generating device 310, a robot 40, and a sensor group 50.

In each of the exemplary embodiments described above, plural types of state data are input to a generator to generate command values and the internal workings of the generator are in the form of a "black box", and this accordingly sometimes leads to a low level of acceptance toward the command values generated. To address this issue, in the third exemplary embodiment a generator for generating command values is generated with a relationship to the state data selected by a user. Moreover, in the third exemplary embodiment, the generator generates information as to whether or not a goal action is achieved based on the generated command values.

Fig. 7 is a block diagram illustrating an example of a functional configuration of the command value generating device 310. As illustrated in Fig. 7, the command value generating device 310 includes, as functional configuration, an acquisition section 31, a reception section 332, a generation section 333, and a control section 38. Each functional configuration is implemented by the CPU 12 reading the command value generating program stored in the storage device 16, and expanding and executing the command value generating program in the memory 14. Note that a hardware configuration of the command value generating device 310 is similar to the hardware configuration of the command value generating device 10 according to the first exemplary embodiment as illustrated in Fig. 6, and explanation thereof will be omitted.

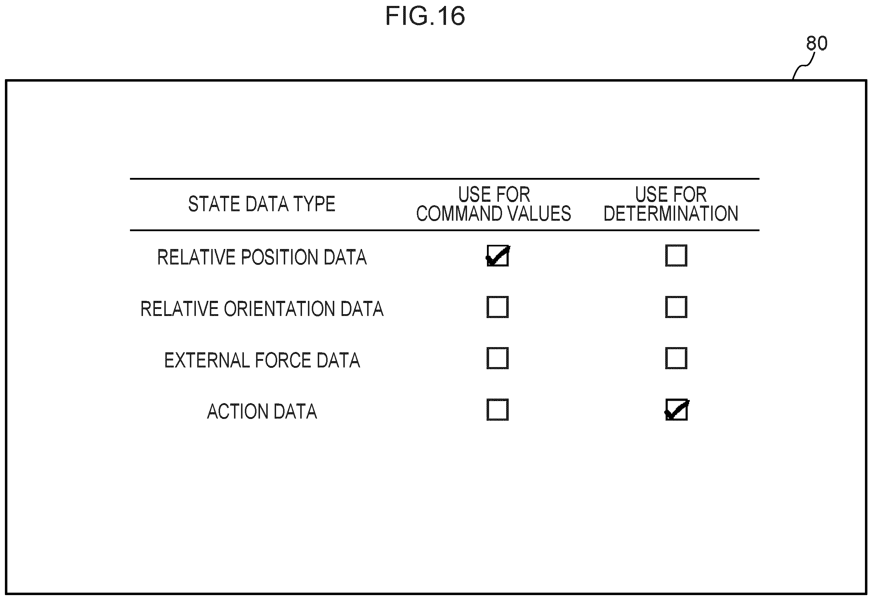

The reception section 332 displays a type selection screen 80 such as illustrated in Fig. 16, for example, and receives selection of a state data type to use for generation of the generator from out of the plural types of state data acquired by the acquisition section 31. The type selection screen 80 illustrated in Fig. 16 includes, for each state data type, items of a "use for command values" that is checked in a case in which to be employed to generate the command values, and "use for determination" that is checked in a case in which to be employed to determine action goal achievement.

Based on the state data of the type selected and command values, the generation section 333 trains the parameters of a generator including a command value generating unit to generate command values and a determination unit to determine achievement of an action goal. Specifically, based on the state data of the type selected and command values, the generation section 333 generates the command value generating unit by optimizing the parameters to generate command values capable of reproducing states expressed by the state data of the type selected. A regression equation or the like that expresses a relationship between the state data of the type selected and command values may be employed, for example, as the command value generating unit. Moreover, the generation section 333 may include upper limit values of the command values as parameters of the generator.

Moreover, the generation section 333 may generate the determination unit by training a relationship between the state data of the type selected, and a flag (hereafter referred to as a "action goal achievement flag") representing whether or not a state indicated by this state data has achieved the goal action. The generation section 333 may include an action goal value as a parameter of the generator. The generation section 333 optimizes each of the internal parameters of the command value generating unit and the determination unit, and generates the command value generating unit and the determination unit according to the selected state data by reducing a coefficient of state data not selected.

Note that in cases in which at least one out of the upper limit value of the command values or the action goal value has been specified by the user, the generation section 333 fixes a value of at least one out of the specified upper limit value of the command values or the action goal value to a specified value. As well as this, the generation section 333 also generates the generator by optimizing the other parameters. This thereby enables generation of a generation unit capable of outputting command values to better implement an action of the robot desired by a user.

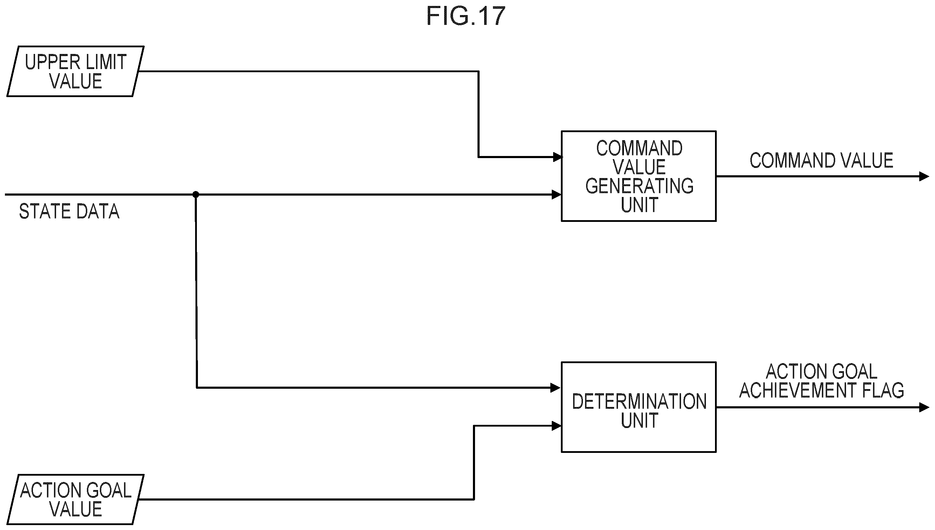

Fig. 17 illustrates an example of a schematic configuration of a generation unit of the third exemplary embodiment. As illustrated in Fig. 17, the input state data and the upper limit value of the command value is input to the command value generating unit. The command value generating unit generates and outputs command values according to the state data. Moreover, the determination unit is input with the input state data and the action goal value. The determination unit outputs the action goal achievement flag according to the state data.

Next, description follows regarding operation and advantageous effects of the robot control system 3 according to the third exemplary embodiment.

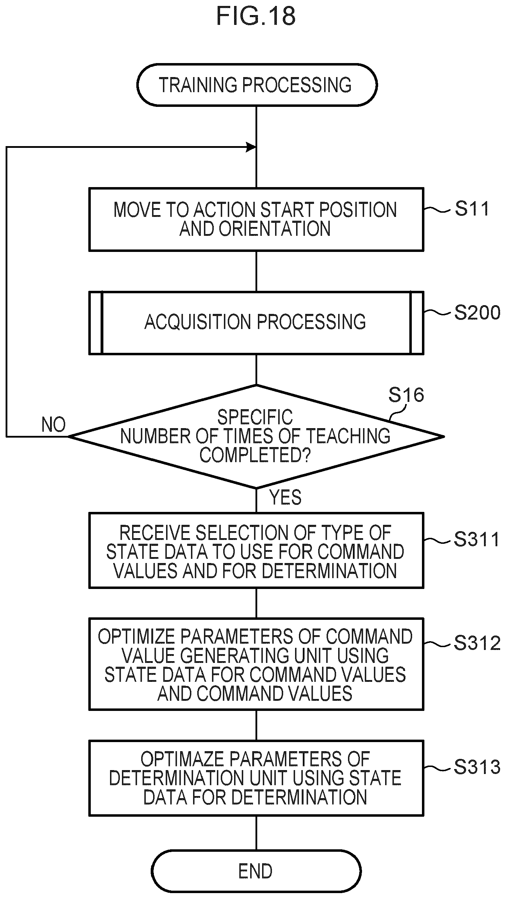

Fig. 18 is a flowchart illustrating a flow of training processing executed by the CPU 12 of the command value generating device 310. The CPU 12 functions as each functional configuration of the command value generating device 310 and the training processing illustrated in Fig. 18 by the CPU 12 reading the training program from the storage device 16, and expanding and executing the training program in the memory 14. Note that in the training processing illustrated in Fig. 18, the same step numbers are appended to similar processing to that of the training processing of the second exemplary embodiment (Fig. 15), and detailed explanation thereof will be omitted.

Processing transitions to step S311 through steps S11, S200, and S16. At step S311, a reception section 332 displays the type selection screen 80, and from out of the plural types of state data acquired by the acquisition section 31, receives a selection of the state data to use for training the command value generating unit and the type of state data to use for training the determination unit.

Next at step S312, the generation section 333 optimizes the parameters of the command value generating unit for generating command values based on the state data of the type selected as the state data to be used for training the command value generating unit and on the command values that are based on the action data. Next at step S313, the generation section 333 optimizes the parameters of the determination unit for generating the action goal achievement flag in accordance with the state data of the type selected as the state data to be used for training the determination unit. The generator including the command value generating unit and the determination unit is generated in this manner. The training processing is then ended.

The control processing is similar to that of the first exemplary embodiment, and so detailed explanation thereof will be omitted. Note that in the control phase, in a case in which the action goal achievement flag output from the generator indicates that the action goal is not being achieved, control may be performed such that the action of the robot 40 is halted, or the command values may be corrected in a direction to achieve the action goal value.

As described above, in the robot control system according to the third exemplary embodiment, the command value generating device generates the generator using the state data of the type selected by the user. This enables output of command values having a higher level of acceptance to a user than command values generated by a generator whose content is a "black box".

Note that in the third exemplary embodiment too, similarly to in the first exemplary embodiment, a segment selection screen such as illustrated in Fig. 9 may be displayed, so as to receive a selection of the segment for utilization in training the generator for the state data of the type selected. This thereby enables a situation to be prevented in which, in a case in which an unintended action has mistakenly been taught to the robot during manual teaching or the like, state data based on sensor data acquired during such teaching is utilized to generate the generator.

Moreover, in the third exemplary embodiment a user interface may be provided to enable a user to check and correct parameters for the generated generator. As such a user interface, for example, a screen capable of directly correcting parameter of the generator may be displayed. Moreover, for example, a simulation image of an action based on the command values output from the generated generator or the like may be displayed. A user may then check the action using the simulation image, may add a correction such as slowing the action velocity, may correct the parameters corresponding thereto, and, for example, may reflect a correction in the generator, such as a drop in the upper limit value. Moreover, a simulation image of an action based on the command values output from the generator after parameter correction may be displayed or the like, so as to enable checking of the corrected content. Adopting such an approach enables clearly inappropriate parameters, parameters not aligned with the intention of the user, or the like to be corrected in advance.

### Fourth Exemplary Embodiment

Next, description follows regarding a fourth exemplary embodiment. Note that the same reference numerals are appended to configuration in the robot control system according to the fourth exemplary embodiment similar to that of the robot control system 1 according to the first exemplary embodiment, and detailed explanation thereof will be omitted.

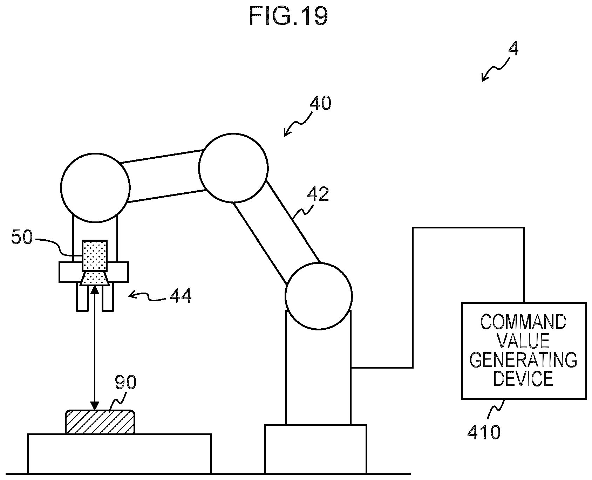

As illustrated in Fig. 19, a robot control system 4 according to the fourth exemplary embodiment is configured including a command value generating device 410, a robot 40, and a sensor group 50. In the fourth exemplary embodiment a vision sensor is included in the sensor group 50. Note that similarly to in each of the exemplary embodiments described above, sensors other that the vision sensor are also included in the sensor group 50, however in Fig. 19 only the vision sensor is illustrated as a sensor contained in the sensor group 50.

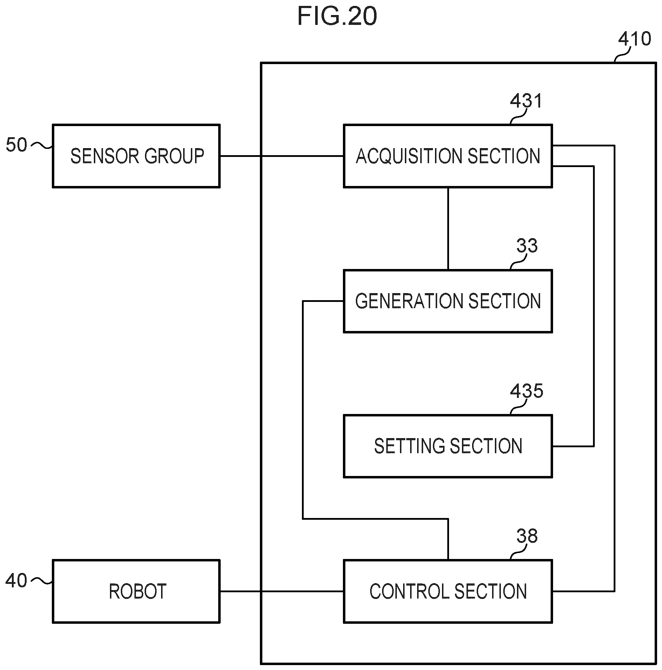

Fig. 20 is a block diagram illustrating an example of a functional configuration of the command value generating device 410. As illustrated in Fig. 20, the command value generating device 410 includes, as functional configuration, an acquisition section 431, a generation section 33, a setting section 435, and a control section 38. Each functional configuration is implemented by the CPU 12 reading the command value generating program stored in the storage device 16, and expanding and executing the command value generating program in the memory 14. The hardware configuration of the command value generating device 410 is similar to the hardware configuration of the command value generating device 10 according to the first exemplary embodiment as illustrated in Fig. 6, and explanation thereof will be omitted.

The acquisition section 431 acquires an image capturing a work area including a target object in a case in which teaching an action of the robot 40 manually. Specifically, the acquisition section 431 acquires an image acquired with the vision sensor.

Moreover, the acquisition section 431 computes a distance between the vision sensor and the target object 90 based on a pre-set size of the target object 90 and on a size on the image of the target object 90 as recognized in the acquired image. The acquisition section 431 stores, as a set, a computed distance between the vision sensor and the target object 90, together with positional coordinates of a finger of the robot 40 in a case in which the image employed for computing the above distance was acquired. Then the acquisition section 431 acquires, as a single item of state data, time series data of the distance to the target object 90 based on this stored information and on time series data of the positional coordinates of the finger acquired during manual teaching.

Moreover, in order to recognize the target object 90, and the placing location or the like of the target object 90, in the image acquired by the vision sensor, there is a need to set in advance parameters to be employed in recognition based on the image by the vision sensor. Then the setting section 435 sets parameters for use in image recognition based on the image acquired by the acquisition section 431. Setting the parameters for use in image recognition includes optimizing parameters of a recognition model, such as a neural network, for recognizing a target object in an image, and calibration of internal parameters and external parameters of the camera of the vision sensor.

Next, description follows regarding operation and advantageous effects of the robot control system 4 according to the fourth exemplary embodiment.

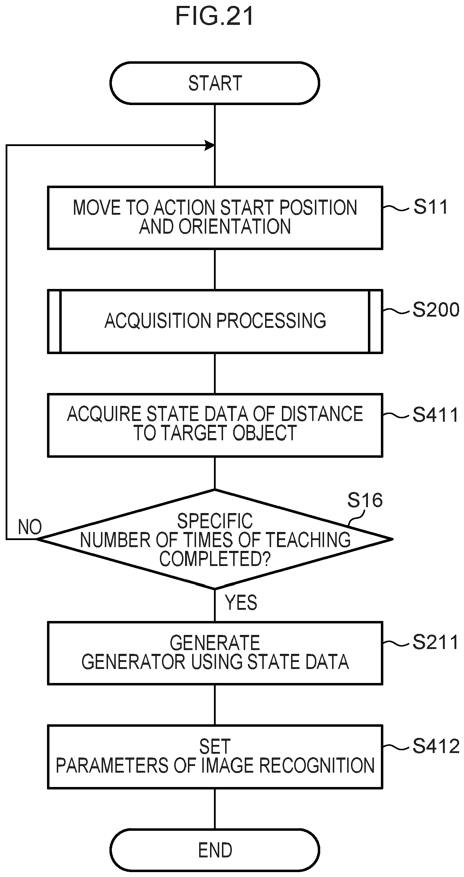

Fig. 21 is a flowchart illustrating a flow of training processing executed by the CPU 12 of the command value generating device 410. The CPU 12 functions as each functional configuration of the command value generating device 410 and the training processing illustrated in Fig. 21 is executed by the CPU 12 reading the training program from the storage device 16, and expanding and executing the training program in the memory 14. Note that in the training processing illustrated in Fig. 21, the same step numbers are appended to similar processing to that of the training processing of the second exemplary embodiment (Fig. 15), and detailed explanation thereof will be omitted.

Processing transitions to step S411 through steps S11 and S200. At step S411, the acquisition section 431 computes a distance between the vision sensor and the target object 90 based the pre-set size of the target object 90 and on the acquired image. The acquisition section 431 then stores, as a set, the computed distance and the positional coordinates of the finger of the robot 40 at this time. Storing of this information may be performed only in a case in which the current step is executed initially. Then in a case in which the current step is subsequently being executed, the distance to the target object is acquired as a single item of state data based on this stored information, and on the positional coordinates of the finger acquired during manual teaching.

Next, processing transitions to step S412 through step S16 and step S211. At step S412, the setting section 435 sets the parameters for use in image recognition based on the image acquired by the acquisition section 431, and ends the training processing.

The control processing is similar to that of the first exemplary embodiment, and so detailed explanation thereof will be omitted.

As described above, in the robot control system according to the fourth exemplary embodiment, the command value generating device acquires time series data of the distance to the target object as a single item of state data based on the image from the vision sensor, and on the pre-set size of the target object. Triangulation is required to recognize the distance in the Z axis direction without employing a special sensor such as a depth sensor or the like, however the distance is not able to be recognized with good precision using triangulation in a case in which not provided with reference information. In the fourth exemplary embodiment, the distance to the target object can be acquired with good precision without using a special sensor. This thereby enables generation of command values capable of appropriately executing an action that needs the distance in the Z axis direction to be ascertain exactly, such as an action to grip the target object using a hand section.

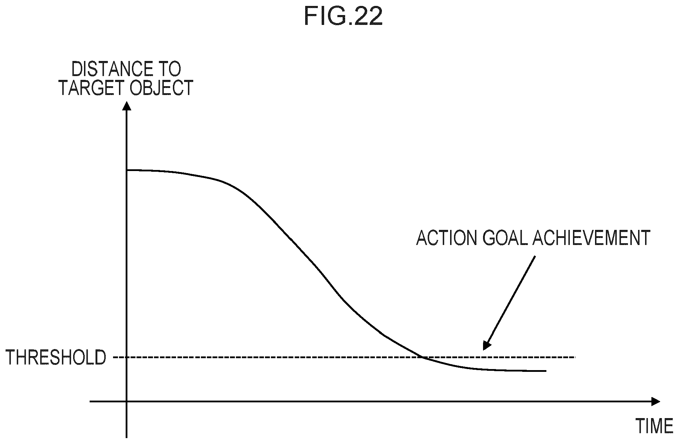

Note that in a case in which, as in the third exemplary embodiment, a generator is generated that includes a determination unit to determine whether or not an action goal is achieved, a distance to the target object may be selected as the state data to generate the determination unit. In such cases, as illustrated in Fig. 22, in cases in which the distance to the target object is a threshold set as the action goal value or lower, a determination unit for outputting a flag indicating action goal achievement may be generated. This thereby enables an action to grip a target object using the hand section to be executed robustly.

Moreover, in the robot control system according to the fourth exemplary embodiment, the command value generating device performs setting of the parameters for use in image recognition based on the image acquired by the vision sensor. This thereby enables setting of the parameters for use in image recognition to be performed together with generating the generator to generate the command values to control the action of the robot 40, enabling a reduction in the effort of the user. Moreover, as a secondary effect, action checking using the set parameters can also be executed easily.

### Fifth Exemplary Embodiment

Next, description follows regarding a fifth exemplary embodiment. Note that the same reference numerals are appended to configuration in the robot control system according to the fifth exemplary embodiment similar to that of the robot control system 1 according to the first exemplary embodiment, and detailed explanation thereof will be omitted.

As illustrated in Fig. 1, a robot control system 5 according to the fifth exemplary embodiment is configured including a command value generating device 510, a robot 40, and a sensor group 50.

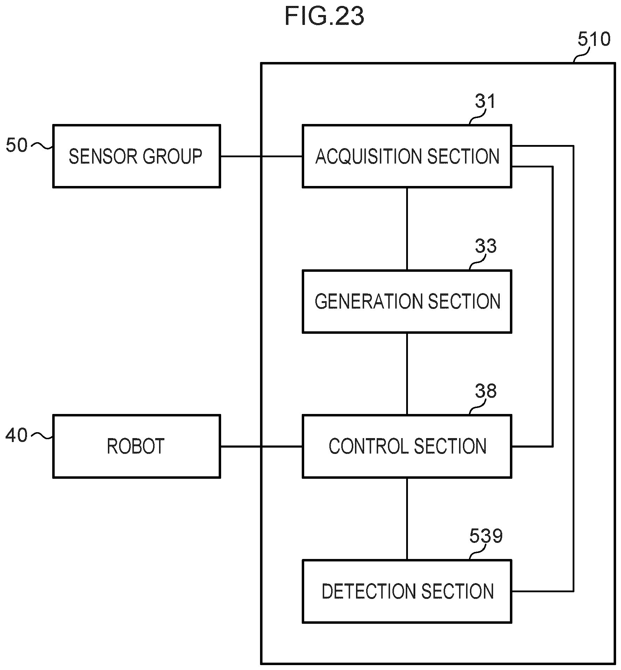

Fig. 23 is a block diagram illustrating an example of a functional configuration of the command value generating device 510. As illustrated in Fig. 23, the command value generating device 510 includes, as functional configuration, an acquisition section 31, a generation section 33, a control section 38, and a detection section 539. Each functional configuration is implemented by the CPU 12 reading the command value generating program stored in the storage device 16, and expanding and executing the command value generating program in the memory 14. Note that the hardware configuration of the command value generating device 510 is similar to the hardware configuration of the command value generating device 10 according to the first exemplary embodiment as illustrated in Fig. 6, and explanation thereof will be omitted. However, the command value generating program according to the fifth exemplary embodiment includes a detection program to execute detection processing, described later, in addition to the training program and the control program.

The detection section 539 inputs the command values generated by the generator into a generator for estimating state data by back calculation, and detects any abnormalities occurring during the task by the robot 40 by comparing the estimated state data against the state data acquired by the acquisition section 31.

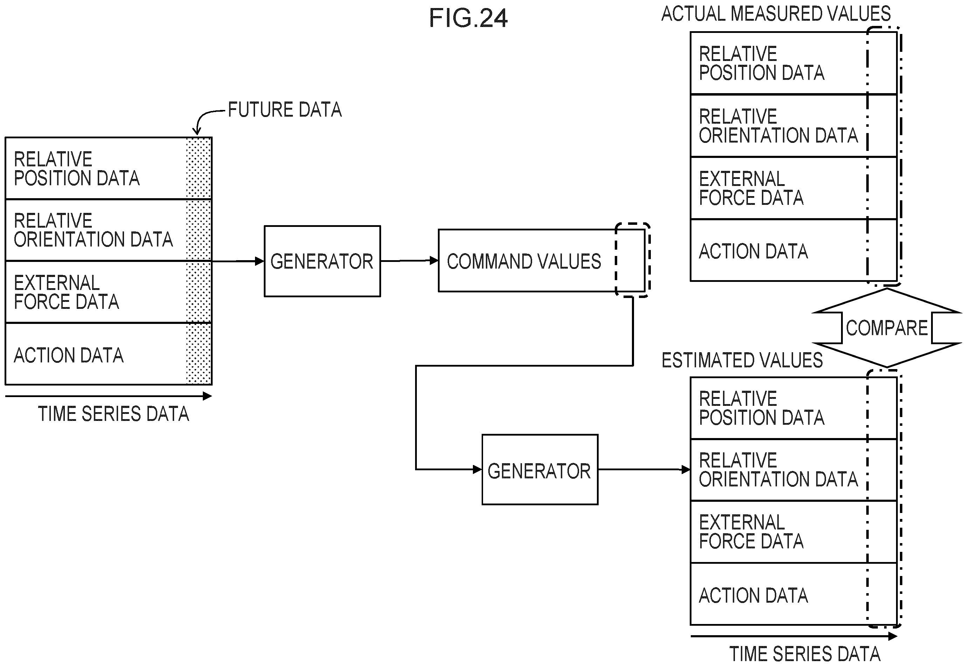

Specifically, as illustrated in Fig. 24, in the control phase, the detection section 539 inputs state data for times t-n to t+k, which is time series data, into the generator. Time t-n to time t are times in the past with reference to time t, and time t to time t+k are times in the future with reference to time t. This means that the shaded segments in Fig. 24 corresponds to future data with reference to time t. The detection section 539 inputs the command values for the time t to time t+k output from the generator (the dashed line portion in Fig. 24) into the generator for generating state data for time t to time t+k (the single-dot broken lines portions in Fig. 24) by back calculation. The detection section 539 then takes a difference between this generated time t to time t+k state data and time t to time t+k state data as converted from the sensor data, which is measurement values acquired by the acquisition section 31 (the double-dot broken line portions in Fig. 24), and compares this difference to a predetermined threshold. The detection section 539 detects an abnormality in a case in which this difference is the threshold or greater, and controls the state so as to proceed to a state-transition for in a case in which an abnormality occurs in the action strategy flowchart. In cases in which the action strategy flowchart does not have a state-transition for in a case in which an abnormality occurs, the detection section 539 notifies the user that an abnormality has occurred.

Next, description follows regarding operation and advantageous effects of the robot control system 5 according to the fifth exemplary embodiment.

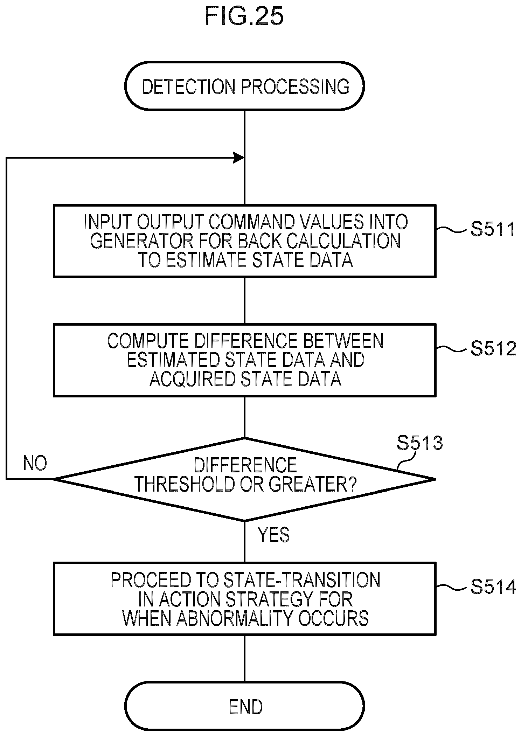

Similar training processing and control processing is executed to the training processing and control processing of one or other of the above exemplary embodiments. In the robot control system 5 according to the fifth exemplary embodiment, the detection processing is executed in parallel to the control processing. Fig. 25 is a flowchart illustrating a flow of detection processing executed by the CPU 12 of the command value generating device 510. The CPU 12 functions as each functional configuration of the command value generating device 510 and the detection processing illustrated in Fig. 25 is executed by the CPU 12 reading the detection program from the storage device 16, and expanding and executing the detection program in the memory 14.

At step S511, the detection section 539 inputs the command values output to the robot 40 into the generator for estimating the state data by back calculation from the command values. Next, at step S512 the detection section 539 computes a difference between the estimated state data, and the state data acquired by the acquisition section 31. Next, at step S513 the detection section 539 determines whether or not the difference computed at step S512 is the predetermined threshold or greater. Processing transitions to step S514 when the difference is the threshold or greater, and processing returns to step S511 when the difference is less than the threshold. At step S514, when this state is a state in the action strategy to transition to a next state in a case in which an abnormality has occurred, the detection section 539 tells the control section 38 that execution of this action is complete and to proceed to the processing for in a case in which an abnormality has occurred. In cases in which the transition destination for in a case in which an abnormality has occurred is an undecided state, the detection section 539 notifies the user that an abnormality has been detected, and ends the detection processing.

As explained above, in the robot control system according to the fifth exemplary embodiment, the command value generating device compares the state data estimated by back calculation from inputting the command values to the generator for generating command values from the state data, against the actual state data. An abnormality is then detected in cases in which a difference between these two is large. This thereby enables detection of an abnormality without the creation of complex abnormality detection conditions.

Note that although in each of the exemplary embodiments described above description has been given of cases in which the functional configuration to function in the training phase, and the functional configuration to function in the control phase, are configured by the same device, these may be respectively configured by separate devices.

Moreover, the processing executed by the CPU reading software (a program) in each of the above exemplary embodiments may be executed by various processors other than a CPU. Examples of such processors include programmable logic devices (PLD) that allow circuit configuration to be modified post-manufacture, such as field-programmable gate arrays (FPGA), and dedicated electronic circuits, these being processors including a circuit configuration custom-designed to execute specific processing, such as an application specific integrated circuits (ASIC). Moreover, the processing may be executed by any one of these various types of processor, or may be executed by a combination of two or more of the same type or different types of processor (such as plural FPGAs, or a combination of a CPU and an FPGA). The hardware structure of these various types of processors is more specifically an electronic circuit combining circuit elements such as semiconductor elements.

Moreover, although in each of the above exemplary embodiments an embodiment was described in which the command value generating program was pre-stored (installed) on a storage device, there is no limitation thereto. The program may be provided in a format stored on a storage medium such as a CD-ROM, a DVD-ROM, a Bluray disc, USB memory, or the like. The program may also be provided in a format downloadable from an external device over a network.

### Explanation of Reference Numerals

- 1, 2, 3, 4, 5: robot control system
- 10, 210, 310, 410, 510: command value generating device
- 12: CPU
- 14: memory
- 16: storage device
- 18: input-output I/F
- 20: input-output device
- 22: storage medium reading device
- 24: communication I/F
- 26: bus
- 31, 231, 431: acquisition section
- 32, 332: reception section
- 33, 333: generation section
- 38: control section
- 234: instruction section
- 435: setting section
- 539: detection section
- 40: robot
- 42: robot arm
- 44: hand section
- 50: sensor group
- 60: controller
- 62: teaching machine
- 70: segment selection screen
- 80: type selection screen
- 90: target object
- 90A: main target object
- 90B: auxiliary target object

## Claims

1. A command value generating device, comprising:
an acquisition section that acquires command values to execute a task on a target object with a robot and acquires state data representing a state of the robot in a case in which an action of the robot during the task is taught manually, which is state data of a plurality of types including at least action data representing an action of the robot, position/orientation data representing a relative position and a relative orientation between the robot and the target object, and external force data representing external force received by the target object during the task; and
a generation section that generates a generator for, based on the command values and the state data acquired for corresponding times by the acquisition section, generating command values to execute an action with the robot corresponding to the state data that has been input.

2. The command value generating device of claim 1, wherein the generation section generates the generator by determining internal parameters of the generator based on optimization.

3. The command value generating device of claim 1 or claim 2, further comprising:
a reception section that receives a selection of a segment of the state data to be used for generation of the generator from among the state data acquired by the acquisition section for each of plural times of teaching; and
wherein the generation section generates the generator utilizing the segment of the state data selected.

4. The command value generating device of claim 3, wherein:
the reception section receives a selection of a type of the state data to be used for generation of the generator from among the state data of a plurality of types acquired by the acquisition section; and
the generation section generates the generator by optimizing a parameter for generating command values capable of reproducing a state represented by the state data of the selected type, based on the state data of the selected type and the command values.

5. The command value generating device of claim 4, wherein the generation section receives correction to a parameter of the generator that was generated.

6. The command value generating device of claim 4 or claim 5, wherein:
parameters of the generator include an upper limit value of the command value, and a goal value of an action for the command value; and
the generation section generates the generator by fixing the upper limit value and the goal value to specified values and optimizing other parameters.

7. The command value generating device of any one of claim 1 to claim 6, further comprising an instruction section that:
determines whether or not the robot is operable based on a command value generated in a case in which the state data having a perturbation term included in a parameter that possibly fluctuates in the task has been input to the generator generated by the generation section, and in a case in which determined not operable, instructs the acquisition section to acquire command values and the state data generated in a case in which the perturbation term has been included.

8. The command value generating device of any one of claim 1 to claim 7, wherein the generation section performs at least one of removing part of the state data used for generation of the generator or adding state data newly acquired by the acquisition section, and then re-executes generation of the generator.

9. The command value generating device of any one of claim 1 to claim 8, wherein:
the acquisition section acquires an image in which a work area including the target object has been captured during teaching, and
the command value generating device further comprises a setting section that sets a parameter to recognize the work area based on the image acquired by the acquisition section.

10. The command value generating device of claim 9, wherein the acquisition section acquires a distance between a camera for capturing the image and the target object as computed based on a pre-set size of the target object and on a size on an image of the target object as recognized in the image.

11. The command value generating device of any one of claim 1 to claim 10, wherein manual teaching of an action of the robot is executed by direct teaching, remote operation from a controller, or remote operation using a teaching machine connected by bilateral control to the robot.

12. The command value generating device of any one of claim 1 to claim 11, further comprising a control section that controls the robot by outputting command values generated by the generator.

13. The command value generating device of claim 12, further comprising a detection section that detects for an abnormality occurring during a task performed by the robot by inputting command values generated by the generator into a generator for back calculation to estimate the state data, and comparing the state data as estimated against the state data acquired by the acquisition section.

14. A command value generating method, comprising:
an acquisition section acquiring command values to execute a task on a target object with a robot and acquires state data representing a state of the robot in a case in which an action of the robot during the task is taught manually, which is state data of a plurality of types including at least action data representing an action of the robot, position/orientation data representing a relative position and a relative orientation between the robot and the target object, and external force data representing external force received by the target object during the task; and
a generation section generating a generator for, based on the command values and the state data acquired for corresponding times by the acquisition section, generating command values to execute an action with the robot corresponding to the state data that has been input.

15. A command value generating program that causes a computer to function as:
an acquisition section that acquires command values to execute a task on a target object with a robot and acquires state data representing a state of the robot in a case in which an action of the robot during the task is taught manually, which is state data of a plurality of types including at least action data representing an action of the robot, position/orientation data representing a relative position and a relative orientation between the robot and the target object, and external force data representing external force received by the target object during the task; and
a generation section that generates a generator for, based on the command values and the state data acquired for corresponding times by the acquisition section, generating command values to execute an action with the robot corresponding to the state data that has been input.
